# EUROPÄISCHE PATENTANMELDUNG

(11) **EP 2 253 867 A1**
(43) Veröffentlichungstag der Anmeldung: **24.11.2010**
(21) Anmeldenummer: 10162648.9
(22) Anmeldetag: 12.05.2010
(51) Int. Cl.: F16H 47/04, B60K 6/445, F16H 3/72, F16H 37/08, F16H 37/10

(54) **Leistungsverzweigungsgetriebe**

(30) Priorität: 19.05.2009 AT 3232009 U
(71) Anmelder: Aitzetmüller, Heinz, 4817 St. Konrad (AT); Stöckl, Dieter, 4400 St. Ulrich (AT)
(72) Erfinder: Aitzetmüller, Heinz, 4817 St. Konrad (AT); Stöckl, Dieter, 4400 St. Ulrich (AT)
(74) Vertreter: Staudt, Armin Walter

(57) **Zusammenfassung**

Die vorliegende Erfindung betrifft ein Leistungsverzweigungsgetriebe mit zwei leistungsverzweigten Bereichen für Kraftfahrzeuge mit einer Brennkraftmaschine, die eine Eingangswelle (1) des Leistungsverzweigungsgetriebes antreibt, wobei das Leistungs-verzweigungsgetriebe eine Steuerungseinrichtung in Form eines Variators (6) aufweist, mit dem auch die Drehrichtung der Abtriebswelle (20) zu den Rädern des Kraftfahrzeuges veränderbar und mit dem die Drehzahl der Abtriebswelle (20) stufenlos beeinflussbar ist. Weiters besitzt das Leistungsverzweigungsgetriebe ein Summierplanetengetriebe (25), welches zwei Sonnenräder (28, 34) mit unterschiedlichen Zahnraddurchmessern, zwei Planetenräder (29, 30) mit unterschiedlichen Zahnraddurchmessern, sowie ein Hohlrad (24) umfasst. Zusätzlich sind wenigstens drei Kupplungen (23, 36, 40) für den Übergang von einem Antriebsbereich in den nächsten Antriebsbereich vorgesehen.

## Beschreibung

Die vorliegende Erfindung betrifft ein Leistungsverzweigungsgetriebe für Kraftfahrzeuge mit einer Brennkraftmaschine, die eine Eingangswelle des Leistungsverzweigungsgetriebes antreibt, wobei das Leistungsverzweigungsgetriebe eine Steuerungseinrichtung aufweist, mit dem die Drehrichtung einer Abtriebswelle zu Rädern des Kraftfahrzeuges veränderbar und mit dem die Drehzahl der Abtriebswelle stufenlos einstellbar ist.

Insbesondere betrifft die Erfindung ein Leistungsverzweigungsgetriebe mit zwei leistungsverzweigten Bereichen für Kraftfahrzeuge mit einer Brennkraftmaschine, die eine Eingangswelle des Leistungsverzweigungsgetriebes antreibt, wobei das Leistungsverzweigungsgetriebe eine Steuerungseinrichtung in Form eines Variators aufweist, mit dem auch die Drehrichtung der Abtriebswelle zu den Rädern des Kraftfahrzeuges veränderbar und mit dem die Drehzahl der Abtriebswelle stufenlos beeinflussbar ist. Weiterhin besitzt das Leistungsverzweigungsgetriebe ein Summierplanetengetriebe, welches zwei Sonnenräder mit unterschiedlichem Zahnraddurchmesser, zwei Planetenräder mit unterschiedlichem Zahnraddurchmesser, sowie ein Hohlrad umfasst. Zusätzlich sind wenigstens drei Kupplungen für den Übergang von einem Antriebsbereich in den nächsten Antriebsbereich vorgesehen.

### Stand der Technik:

Aus der US 3,979,972 ist ein hydromechanisches Getriebe nach Art eines Leistungsverzweigungsgetriebes bekannt, welches eine mit einer Brennkraftmaschine verbundene Eingangswelle und eine Ausgangswelle umfasst. Dabei sind in einem ersten Zweig zwischen Eingangswelle und Ausgangswelle Kupplungen und Planetengetriebe vorgesehen, wogegen in einem zweiten Zweig ein hydrostatischer Antrieb arbeitet, der mit Stirnradgetrieben in Wirkverbindung steht und zwei hintereinander liegende Hydrostateinheiten aufweist.

Aus der DE 199 54 894 ist ein Leistungsverzweigungsgetriebe bekannt, welches für Traktoren, rad- und kettengetriebene Arbeitsmaschinen und Nutzkraftwagen geeignet ist. Das hierin offenbarte Leistungsverzweigungsgetriebe besitzt einen mechanischen Zweig, einen hydrostatischen Zweig und ein oder mehrere Planetengetriebe, über die der mechanische Leistungsanteil und der hydrostatische Leistungsanteil wieder zusammengeführt werden.

In der DE 101 28 853 wird ein Kraftfahrzeug beschrieben, welches einen Antriebsstrang mit einer Antriebseinheit, ein Getriebe und eine Kupplungseinrichtung zur Momentübertragung zwischen der Antriebseinheit und dem Getriebe aufweist. Die Kupplungseinrichtung ist als Mehrfach-Kupplungseinrichtung, insbesondere Doppelkupplungseinrichtung, mit einer der ersten Getriebeeingangswelle zugeordneten ersten Kupplungsanordnung und einer der zweiten Getriebeeingangswelle zugeordneten zweiten Kupplungsanordnung ausgeführt.

Die US 3,918,325 beschreibt ein leistungsverzweigtes Getriebe mit einer Antriebswelle, einem ersten Planetengetriebe für Langsamlauf, einem zweiten Planetengetriebe für Schnelllauf und einer mit einem gemeinsamen Planetenträger verbundenen Abtriebswelle. Weiters ist ein stufenlos steuerbarer hydraulischer Getriebezweig mit zwei als Pumpe und Motor arbeitenden hydraulischen Einheiten vorgesehen, von denen eine auf eine Abtriebswelle wirkt.

Alle diese genannten Systeme weisen jedoch eine Reihe von Nachteilen auf. So ist ihr Getriebeaufbau kompliziert und daher mit erheblichen Herstellungskosten behaftet. In den Hauptbetriebsbereichen des Motors und insbesondere bei hohen Geschwindigkeiten sind teils erhebliche Wirkungsgradverluste unvermeidbar.

### Aufgabenstellung

Die vorliegende Erfindung stellt sich daher die Aufgabe, die genannten Mängel der bekannten Einrichtungen weitgehend zu vermeiden und einen einfachen, in seiner Herstellung kostengünstigen Getriebeaufbau zu ermöglichen. Weiters soll in den Hauptbetriebsbereichen und insbesondere bei hohen Fahrzeuggeschwindigkeiten der Wirkungsgrad erhöht werden.

Diese Aufgaben werden ausgehend von einem Getriebe der eingangs genannten Gattung erfindungsgemäß dadurch gelöst, dass die Eingangswelle des Leistungsverzweigungsgetriebes über ein Sonnenrad mit einem Summierplanetengetriebe verbunden ist, dass die Eingangswelle des Leistungsverzweigungsgetriebes über eine Stirnradstufe mit der Steuerungseinrichtung verbunden ist, welche als Variatoreinheit ausgebildet ist, dass der Abtrieb entweder über eine Zwischenwelle mit Stirnradstufe zur Abtriebswelle erfolgt oder die Zwischenwelle direkt die Abtriebswelle darstellt, und dass der Abtrieb abhängig von einer der Geschwindigkeit des Kraftfahrzeugs entweder über die Variatoreinheit oder über einen ersten leistungsverzweigten Bereich oder über einen zweiten leistungsverzweigten Bereich erfolgt, wobei die leistungsverzweigten Bereiche durch ein unterschiedliches Zusammenwirken der Variatoreinheit und des Summierplanetengetriebes gekennzeichnet sind, und wobei zur Verbindung des jeweiligen Abtriebs mit der Zwischenwelle drei Kupplungen für den zugkraftunterbrechungsfreien Übergang von einem Abtriebsbereich in den nächsten Abtriebsbereich vorgesehen sind.

Das erfindungsgemäße Leistungsverzweigungsgetriebe weist ein Summierplanetengetriebe auf, welches zwei Sonnenräder mit unterschiedlichem Zahnraddurchmesser, zwei Planetenräder mit unterschiedlichem Zahnraddurchmesser, die miteinander fest verbunden sind, sowie ein Hohlrad umfasst.

Mit dem Hohlrad in Wirkverbindung steht ein Variatorsystem, welches der stufenlosen Steuerung dient und bei geringen Geschwindigkeiten ein Rückwärtsfahren ermöglicht ohne hierfür einen mechanischen Rückwärtsgang zu erfordern. Das Variatorsystem bildet eine Steuereinrichtung, welche beim Anfahren des Kraftfahrzeuges einerseits die Drehrichtung der Abtriebswelle für Vorwärts- oder Rückwärtsfahrt verändert, andererseits lässt sich mit dem Variatorsystem beim Anfahrvorgang bis zur Höchstgeschwindigkeit die Abtriebswelle stufenlos verstellen.

Mit dem Summierplanetengetriebe stehen drei Wellen in Verbindung, wovon zwei als Hohlwellen ausgebildet sind und die dritte Welle radial umfassen. Diese Wellen stehen mit drei Kupplungen in Wirkverbindung. Mit diesen drei Kupplungen, und in einer bevorzugten Ausführung mit einer vierten Kupplung in Wirkverbindung steht eine Zwischenwelle als Hilfsabtriebswelle. Diese vierte Kupplung ermöglicht in der bevorzugten Ausführung einen rein mechanischen Abtrieb bei hohen Fahrzeuggeschwindigkeiten unter Umgehung des Variatorsystems.

Die mit dieser Erfindung hauptsächlich erzielbaren Vorteile sind:
- dass es ein stufenlos arbeitendes, leicht herstellbares und damit sehr kostengünstiges Leistungsverzweigungsgetriebe ist, wobei die Änderungen der Getriebeübersetzungen ohne Zugkraftunterbrechung erfolgen können;
- dass für langsames Rückwärtsfahren kein mechanischer Rückwärtsgang mehr erforderlich ist;
- dass durch das Variatorsystem bei geringen Geschwindigkeiten ein weiches Anfahren und ein Fahrtrichtungswechsel und ein Betrieb des Fahrzeuges bei Kriechgeschwindigkeiten ohne schleifende Kupplung ermöglicht wird;
- dass der Verbrennungsmotor in günstigen Kennfeldern betrieben werden kann;
- dass in den Hauptbetriebsbereichen durch eine geringe Leistungsübertragung über den Variator ein guter Gesamtwirkungsgrad erzielt wird;
- dass gegebenenfalls bei hohen Fahrzeuggeschwindigkeiten durch eine rein mechanische Leistungsübertragung bei gleichzeitiger Umgehung des Variators geringere Verluste im Getriebe in Kauf genommen werden müssen.

Als Variatorsystem kann jedes beliebige System Verwendung finden, in welchem eine Veränderung der Abtriebsdrehzahl der Variatoreinheit in beiden Drehrichtungen möglich ist, beispielsweise hydrostatische Variatoren mit Verstellpumpe und Konstantmotor oder mit Verstellpumpe und Verstellmotor in der Form von Axialkolbenmaschinen oder Flügelzelleneinheiten oder elektrische Variatoren als Kombination von Generator / E-Motor, eventuell auch unter Einbeziehung von elektrischen oder hydraulischen Speichersystemen.

### Ausführungsbeispiel

Das erfindungsgemäße Leistungsverzweigungsgetriebe wird nachstehend anhand der Figuren näher erläutert. Darin zeigt:
- Fig. 1: ein Getriebeschema für Transporter, PKWs oder LKWs mit hydrostatischem Variator;
- Fig. 2: ein Getriebeschema gemäß Fig. 1 für Pkws oder Lkws mit elektrischem Variator für Hybridfahrzeuge;
- Fig. 3: ein Getriebeschema analog zu Fig. 1 für Radlader, Telehandler, Traktoren und vergleichbaren Einrichtungen mit hohen Geschwindigkeitsan- forderungen in beiden Fahrtrichtungen mit hydrostatischem Variator;
- Fig. 4: ein Getriebeschema analog zu Fig. 1 für Schienenfahrzeuge mit hydrostatischem Variator;
- Fig. 5: die Geschwindigkeitsvektoren am Summierplanetengetriebe nach den Getriebeschemen der Figuren 1 bis 4; und
- Fig. 6: ein Drehzahldiagramm der einzelnen Komponenten des Summierplaneten- getriebes in Abhängigkeit der Fahrzeuggeschwindigkeit nach den Getriebe- schemen der Figuren 1 bis 4.

In der nachfolgenden Figurenbeschreibung wird primär auf hydrostatische Variatoreinheiten Bezug genommen. Alle Ausführungen beziehen sich jedoch ausdrücklich analog auch für alternative Variatoren.

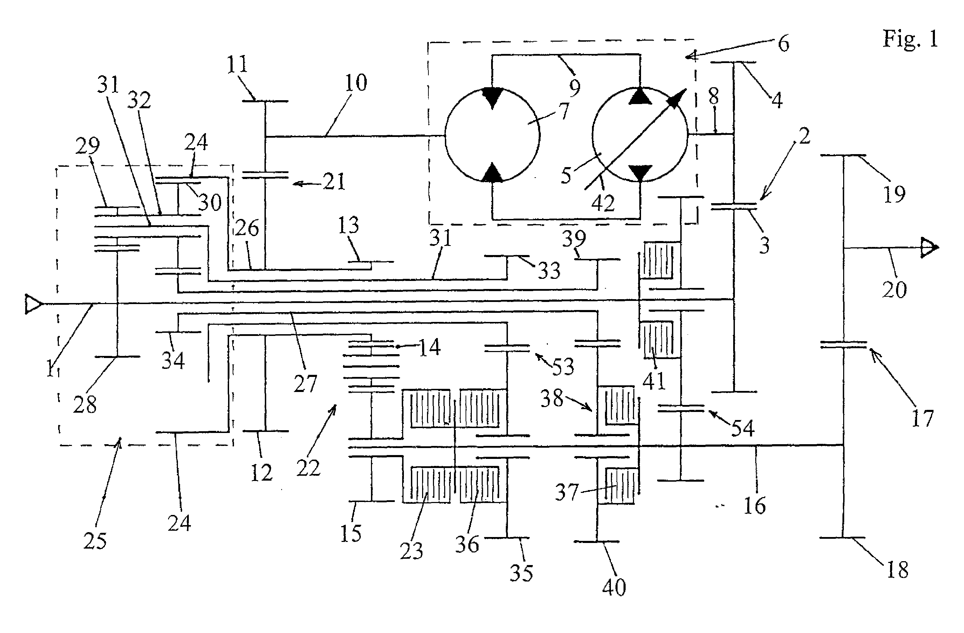

Gemäß Fig. 1 mündet eine von einer nicht dargestellten Brennkraftmaschine kommende Eingangswelle 1 in einem Stirnradgetriebe 2, bestehend aus den Zahnrädern 3 und 4, welche das Drehmoment von Eingangswelle 1 über die Eingangswelle 8 auf die Hydrostateinheit 6 überträgt. Die Hydrostateinrichtung 6 besteht hier aus einer Verstellpumpe 5 mit Verstelleinrichtung 42 und einem Hydromotor 7. Zwischen Verstellpumpe 5 und dem Hydromotor 7 wird das Hydraulikmedium 9 transportiert, abhängig von der Stellung der Verstelleinrichtung 42, welche zwischen zwei Maximalstellungen stufenlos veränderbar ist.

Vom Hydromotor 7 gelangt ein weiteres Drehmoment über die Abtriebswelle 10 zur Stirnradstufe 21, bestehend aus den Zahnrädern 11 und 12. Zahnrad 12 ist über die Hohlwelle 26 einerseits mit dem Hohlrad 24 des Summierplanetengetriebes 25 und andererseits mit Zahnrad 13 verbunden, welches mit einer Zwischenradstufe 22 in Wirkverbindung steht. Über die Zwischenradstufe 22 erfolgt bei geschlossener Kupplung 23 die Leistungsübertragung auf die Zwischenwelle 16, wodurch die gesamte Antriebsleistung nur über den Variator übertragen wird. Von der Zwischenwelle 16 gelangt das Drehmoment über die Stirnradstufe 17, bestehend aus den Zahnrädern 18 und 19, zur Getriebeabtriebswelle 20.

An Stelle der Zwischenradstufe 22 kann auch eine Zahnkette oder ein Riementrieb, der die Antriebsleistung des Variators auf die Zwischenwelle 16 überträgt, vorgesehen sein.

Wie bereits erwähnt, ist die Abtriebswelle 10 des Hydromotors 7 über die Stirnradstufe 21 mit einem Hohlrad 24 eines Summierplanetengetriebes 25 gekoppelt. Das Summierplanetengetriebe 25 ist ein Doppelplanetengetriebe mit den gestuften Planetenrädern 29 und 30 und den Sonnenrädern 28 und 34. Es weist zwei Eingangswellen 1 und 26 und zwei Abtriebswellen 27 und 31 auf. Die Eingangswelle 26 überträgt das Drehmoment vom Zahnrad 12 auf das Hohlrad 24, die Getriebeeingangswelle 1 treibt das Sonnenrad 28 an.

Die Planetenräder 29 und 30 sind miteinander drehfest verbunden und im Steg 31 drehbar gelagert. Im ersten leistungsverzweigten Bereich treiben die Planetenräder 29 und 30 den Steg 31 als Abtriebswelle an, welcher im Zahnrad 33 mündet. Zahnrad 33 ist über Zahnrad 35 mit der Kupplung 36 verbunden, welche mit der Zwischenwelle 16 in Wirkverbindung steht.

Auf der ersten Eingangsseite des Summierplanetengetriebes 25 kämmt das Sonnenrad 28 mit dem Planetenrad 29, auf der zweiten Eingangsseite kämmt das Hohlrad 24 mit dem Planetenrad 30, welches wiederum mit dem Sonnenrad 34 kämmt.

Das Sonnenrad 34 steht mit der Kupplung 37 über die Stirnradstufe 38, bestehend aus den Zahnrädern 39 und 40 in Wirkverbindung, wobei die Kupplung 37 bei geschlossenem Zustand die Zwischenwelle 16 antreibt.

Bei diesem Getriebekonzept ist in einer bevorzugten Ausführung der Erfindung zusätzlich die Möglichkeit einer rein mechanischen Leistungsübertragung durch Schließen der Kupplung 41 vorgesehen. Dieser rein mechanische Gang kann direkt an den zweiten leistungsverzweigten Bereich anschließen, es ist jedoch sinnvoll, die Übersetzung im mechanischen Gang gegenüber der höchsten Übersetzung im Stufenlosgetriebe zu erhöhen, um das Fahrzeug bei hoher Transportgeschwindigkeit mit reduzierter Drehzahl des Verbrennungsmotors antreiben zu können. Damit sind beste Voraussetzungen für einen äußerst effizienten Betrieb bei hohen Transportgeschwindigkeiten gegeben.

Die Leistung des erfindungsgemäßen Leistungsverzweigungsgetriebes kann über 3 bzw. 4 Pfade abgenommen werden:
- Direkte Abnahme von der Variatoreinheit 6 über die Stirnradstufe 21 und die Zwischenradstufe 22,
- Abnahme über den Steg 31,
- Abnahme über das Sonnenrad 34,
- Abnahme durch Koppelung des Sonnenrades 28 mit dem Getriebeausgang 20, entsprechend einer rein mechanischen Leistungsübertragung,

Direkte Abnahme von der Variatoreinheit 6:
Die Eingangswelle 1 vom nicht dargestellten Antriebsmotor des Leistungsverzweigungsgetriebes wirkt über eine Stirnradstufe 2, bestehend aus Zahnrad 3 und
Zahnrad 4 auf die Verstelleinrichtung 42 einer Variatoreinheit, welche hier und in der weiteren Beschreibung zur Vereinfachung als Hydrostateinheit 6, bestehend aus einer Verstellpumpe 5 und einem Hydromotor 7 erläutert wird.

Als Variatoreinheit kann jedoch jedes beliebige System Verwendung finden, in welchem eine Veränderung der Abtriebsdrehzahl der Variatoreinheit in beiden Drehrichtungen möglich ist, beispielsweise hydrostatische Variatoren mit Verstellpumpe und Konstantmotor oder mit Verstellpumpe und Verstellmotor in der Form von Axialkolbenmaschinen oder Flügelzelleneinheiten oder elektrische Variatoren als Kombination von Generator / E-Motor, eventuell auch unter Einbeziehung von elektrischen oder hydraulischen Speichersystemen.

Zahnrad 3 ist mit der Eingangswelle 1 und Zahnrad 4 mit der Eingangswelle 8 zur Verstellpumpe 5 verbunden, welche mit einer Verstelleinrichtung 42 ausgerüstet ist. Mittels des Hydraulikmediums 9 wird von der Verstellpumpe 5 der Hydromotor 7 angetrieben. Der Hydromotor 7 treibt seinerseits über eine Variatorabtriebswelle 10 eine Stirnradstufe 21, bestehend aus Zahnrad 11 und Zahnrad 12 und eine Zwischenradstufe 22 zur Drehrichtungsumkehr, bestehend aus den Zahnrädern 13, 14 und 15 an. Die Zwischenradstufe 22 überträgt das Drehmoment über die geschlossene Kupplung 23 auf die Zwischenwelle 16, die mit einer Stirnradstufe 17, bestehend aus Zahnrad 18 und Zahnrad 19 die Getriebeabtriebswelle 20 dreht. Je nach Stellung der Verstelleinrichtung 42 der Verstellpumpe 5 kann die Drehrichtungsumkehr an der Getriebeantriebswelle erfolgen. An Stelle der Zwischenradstufe 22 kann auch eine Zahnkette oder ein Riementrieb, der die Antriebsleistung des Variators auf die Zwischenwelle 16 überträgt, vorgesehen sein.

In diesem Kopplungszustand ist die Kupplung 23 geschlossen, das Fahrzeug kann in geringer Geschwindigkeit in beide Fahrtrichtungen bewegt werden. Die Fahrtrichtung wird durch die Stellung der Verstelleinrichtung 42 des Variators 6 bestimmt, die Drehzahl der Abtriebswelle 10 legt die Geschwindigkeit fest.

Die Übersetzungen im Summierplanetengetriebe 25 und in den Stirnradstufen 21, 22 und 53 sind so gewählt, dass bei Erreichen eines ausreichenden Fördervolumens der Hydropumpe 5 in einer Richtung, also beim Erreichen einer definierten Drehzahl an der Variatorabtriebswelle 10, Synchrondrehzahl an den Kupplungen 23 und 36 erreicht wird und eine Umschaltung von einem reinen Antrieb über den Variator 6 in den ersten leistungsverzweigten Bereich ohne Unterbrechung der Zugkraft erfolgt.

Abnahme über den Steg 31:
Die Abtriebswelle 10 des Hydromotors 7 ist über die Stirnradstufe 21 mit einem Hohlrad 24 eines Summierplanetengetriebes 25 gekoppelt. Das Summierplanetengetriebe 25 ist ein Doppelplanetengetriebe mit zwei Eingangswellen 1, 26 und zwei Abtriebswellen 27, 31. Die Eingangswelle 26 überträgt das Drehmoment vom Zahnrad 12 auf das Hohlrad 24, die Getriebeeingangswelle 1 treibt das Sonnenrad 28 an.

Die Kopplung der beiden Planetenstufen erfolgt über gestufte Planetenräder 29 und 30, welche miteinander drehfest verbunden im Steg 31 drehbar gelagert sind und den Steg 31 als Abtriebswelle antreiben, welche im Zahnrad 33 mündet. Dieses Zahnrad 33 gibt sein Drehmoment über Zahnrad 35 an die Kupplung 36 weiter.

Auf der ersten Eingangsseite des Summierplanetengetriebes 25 kämmt das Sonnenrad 28 mit dem Planetenrad 29, auf der zweiten Eingangsseite kämmt das Hohlrad 24 mit dem Planetenrad 30, welches wiederum mit dem Sonnenrad 34 kämmt.

Die Drehzahl des Stegs 31 ist bei maximaler Drehzahl des Hohlrades 24 entgegengesetzt zur Drehrichtung des Sonnenrades 28 am geringsten und nimmt linear mit der Veränderung der Drehzahl des Hohlrades 24 zu. Analog dazu wird die Drehzahl des Sonnenrades 34 verringert, je weiter die Drehzahl des Hohlrades 24 sich der Drehzahl des Sonnenrades 28 annähert. Die Veränderung der Abtriebsdrehzahl von Steg 31 erfolgt so lange, bis Gleichlauf zwischen Kupplung 23 und Kupplung 36 vorliegt. In diesem Punkt schließt Kupplung 36 und Kupplung 23 öffnet sich. Die Umschaltung des Übertragungspfades im Synchronpunkt erfolgt ohne Unterbrechung der Zugkraft. Die Verstelleinrichtung 42 befindet sich nahe ihrer ersten Maximalstellung und ändert beim Wechsel von Kupplung 23 auf Kupplung 36 ihre Bewegungsrichtung. Beim Abtrieb durch Steg 31, er stellt den ersten leistungsverzweigten Bereich dar, wird die Leistung nach dem Schließen von Kupplung 36 auf die Zwischenwelle 16 übertragen. Dieser Vorgang bleibt aufrecht, bis die Verstelleinrichtung 42 ihre zweite Maximalstellung erreicht hat.

Abnahme über das Sonnenrad 34:

Bei hoher Drehzahl des Hohlrades 24 in gleicher Richtung wie das Sonnenrad 28 wird Synchrondrehzahl an den Kupplungen 36 und 37 erreicht, wodurch wiederum eine unterbrechungsfreie Umschaltung von Kupplung 36 auf Kupplung 37 erfolgen kann, womit vom ersten leistungsverzweigten Bereich in den zweiten leistungsverzweigten Bereich gewechselt wird. Die Verstelleinrichtung 42 ändert wieder ihre Bewegungsrichtung.

Nach dem Schließen der Kupplung 37 erfolgt im zweiten leistungsverzweigten Bereich die Leistungsabnahme über das Sonnenrad 34 und dessen Drehmoment wird über die mit ihm über die Hohlwelle 27 und die gekoppelte Stirnradstufe 38, bestehend aus den Zahnrädern 39 und 40 auf die Zwischenwelle 16 übertragen. In diesem zweiten leistungsverzweigten Bereich nehmen, abhängig von der Drehzahl von Hydromotor 7 mit zunehmender Geschwindigkeit des Fahrzeuges die Drehzahl des Sonnenrades 34 und die Relativdrehzahlen der Planetenräder 29 und 30 zu bei gleichzeitiger Abnahme der Drehzahl des Steges 31.

Bei maximaler Drehzahl von Hohlrad 24 entgegen der Drehrichtung von Sonnenrad 28 wird maximale Drehzahl am Sonnenrad 34 und maximale Abtriebsdrehzahl bzw. maximale Geschwindigkeit im Stufenlosgetriebe erreicht.

Abnahme durch Koppelung des Sonnenrades 28 mit dem Getriebeausgang 20:

Hier erfolgt eine rein mechanische Leistungsübertragung durch Schließen der Kupplung 41. Dieser rein mechanische Gang kann direkt an den zweiten leistungsverzweigten Bereich anschließen, es ist jedoch sinnvoll, die Übersetzung im mechanischen Gang gegenüber der höchsten Übersetzung im Stufenlosgetriebe zu erhöhen, um das Fahrzeug bei hoher Transportgeschwindigkeit mit reduzierter Drehzahl des Verbrennungsmotors antreiben zu können. Damit sind beste Voraussetzungen für einen äußerst effizienten Betrieb bei hohen Transportgeschwindigkeiten gegeben.

Durch Schließen der Kupplung 41 wird die Zwischenwelle 16 mit dem Sonnenrad 28 gekoppelt, wodurch eine rein mechanische Übertragung der Antriebsleistung erreicht wird. In diesem Betriebszustand wird die Variatoreinheit 6 umgangen und ein hoher Wirkungsgrad erreicht.

Die Umschaltung vom zweiten leistungsverzweigten Bereich in den rein mechanischen Gang erfolgt entweder über schleifende Kupplungen 37 und 41 oder durch Anpassung der Drehzahl des Verbrennungsmotors während des Umschaltvorgangs.

Ein Rückwärtsfahren ist im Betriebsmodus des rein hydrostatischen Fahrens möglich.

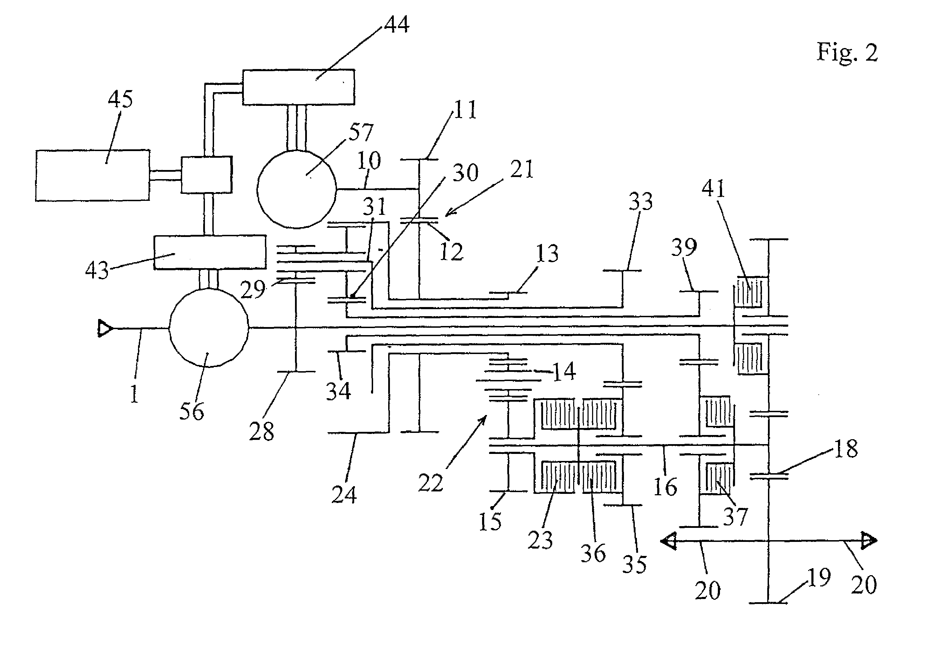

In Fig. 2 ist ein Getriebeschema für Pkws oder Lkws mit elektrischem Variator für Hybridfahrzeuge dargestellt. Hier ist ein Rückwärtsfahren im Betriebsmodus des rein elektrischen Fahrens möglich. Der Aufbau und die Betriebsweise entsprechen im Wesentlichen dem Aufbau und der Betriebsweise des in Fig. 1 dargestellten Leistungsverzweigungsgetriebes. Die Variatoreinheit 6 besteht hier jedoch aus einem elektrischen Generator G und einem Elektromotor M mit zugeordneten Invertern 43 und 44. Bevorzugt ist hier auch ein elektrischer Speicher 45 integriert.

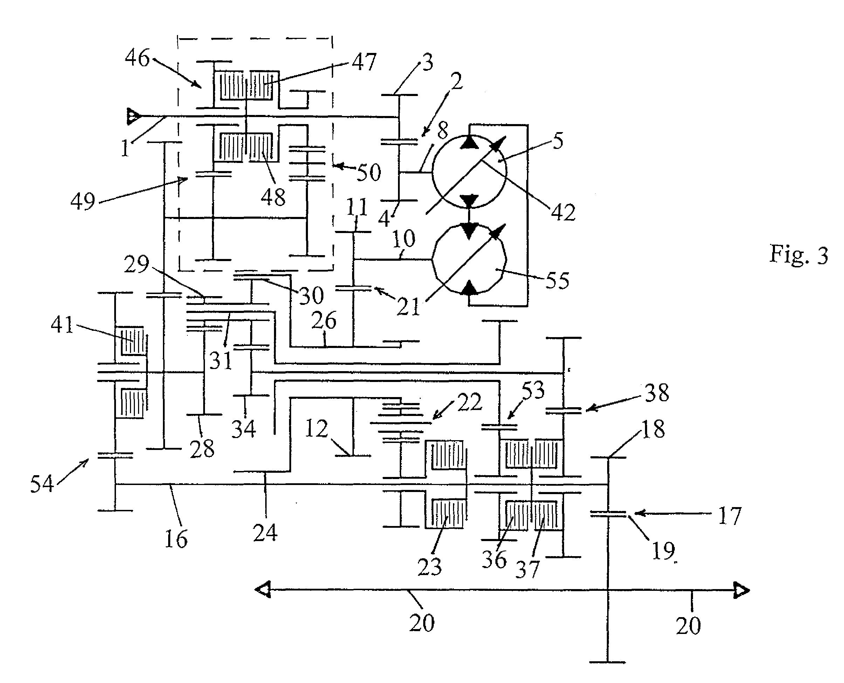

Für Fahrzeuge mit hohen Geschwindigkeitsanforderungen in beiden Fahrtrichtungen und der Möglichkeit einer raschen Änderung der Fahrtrichtung ist eine Ausführung nach Fig. 3 vorgesehen. Die Umkehr der Drehrichtung des gesamten mechanischen Antriebsstrangs erfolgt hier am Getriebeeingang durch eine entsprechende Umkehrvorrichtung 46, welche in der Form von Lamellenkupplungen 47 und 48 mit zugeordneten Stirnradstufen 49 und 50 ausgebildet sein kann, es ist aber auch denkbar, an ihrer Stelle ähnlich wirkende Synchronisierungseinrichtungen nach dem Stand der Technik einzusetzen. Die Drehrichtung wird im mechanischen Pfad umgedreht. Dieses Getriebeschema eignet sich insbesondere für Radlader, Telehandler, Traktoren und vergleichbaren Anwendungen mit hohen Geschwindigkeitsanforderungen in beiden Fahrtrichtungen.

In einer weiteren bevorzugten Ausführung der Erfindung ist hier der Hydromotor 7 nicht ein Konstantmotor, wie in Fig. 1, sondern ein Verstellmotor, beispielsweise in der Form von Axialkolbenmaschinen oder Flügelzelleneinheiten. Dadurch wird eine zusätzliche Spreizung der Motorwirkung ermöglicht.

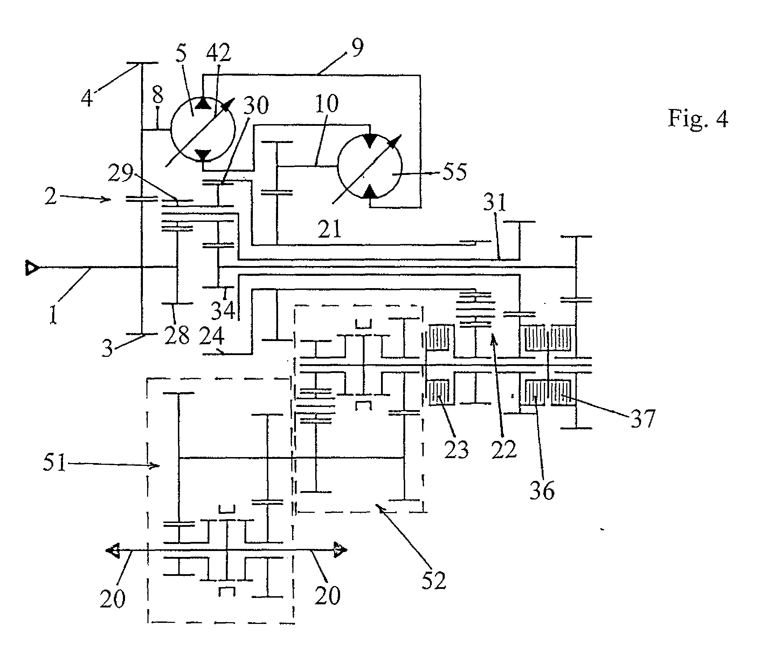

Bei Schienenfahrzeugen, wie Lokomotiven oder Triebfahrzeugen mit Verbrennungsmotor ist eine Getriebeausführung nach Fig. 4 vorgesehen. Das Getriebe ist mit einem nachgeschalteten Rangegetriebe 51 mit High/Low Stufe und mit einem Reversiergetriebe 52 zwischen dem Stufenlosgetriebe und dem Rangegetriebe ausgeführt. Die Schaltung des Rangegetriebes erfolgt mittels Klauenkupplungen während der Fahrt durch entsprechende Anpassung der Drehzahlen im Stufenlosgetriebe. Die Schaltung des Reversiergetriebes erfolgt im Stillstand ebenfalls durch Klauenkupplungen.

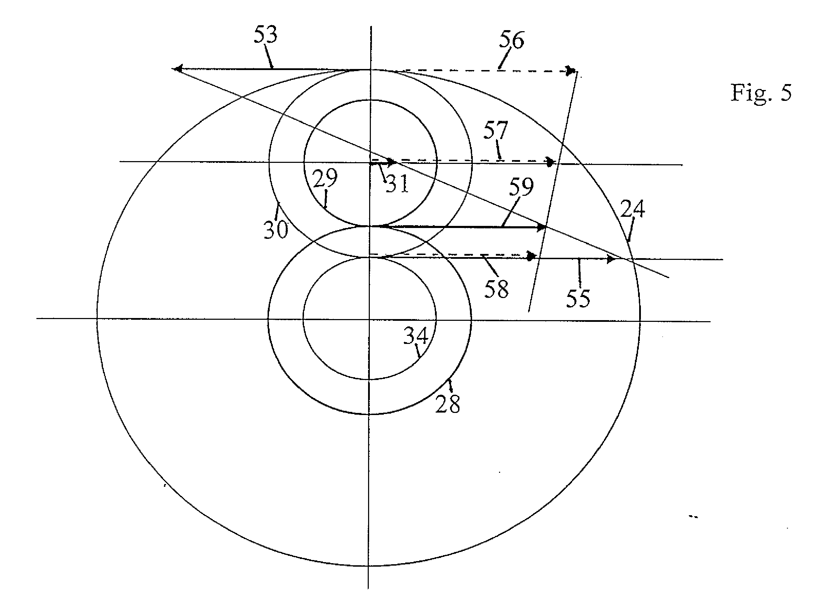

Aus der Abbildung nach Fig. 5 sind die Geschwindigkeitsvektoren am Summierplanetengetriebe 25 erkennbar. Die drehzahlbestimmenden Komponenten in dem Summierplanetengetriebe 25 sind einerseits das Sonnenrad 28, welches mit dem Antriebsmotor gekoppelt ist, und das über die Variatoreinheit 6 angetriebene Hohlrad 24.

Die Geschwindigkeitsverhältnisse im Summierplanetengetriebe 25 bei Drehung des Hohlrades 24 entgegen der Drehrichtung des Sonnenrades 28 und bei gleichgerichteter Drehrichtung sind hier durch Pfeile dargestellt. Die Pfeile 53, 54 und 55 zeigen die Geschwindigkeitsvektoren in Umfangsrichtung am Hohlrad 24, am Steg 31 und am Sonnenrad 34 bei Rotation des Hohlrades 24 entgegen der Drehrichtung des Sonnenrades 28. Die gestrichelten Pfeile 56, 57 und 58 zeigen die Geschwindigkeitsvektoren am Hohlrad 24, am Steg 31 und am Sonnenrad 34 bei Rotation des Hohlrades 24 in gleicher Drehrichtung wie das Sonnenrad 28. Die Umfangsgeschwindigkeit des Sonnenrades 28 ist als Vektor 59 gezeigt, welche infolge der Kopplung des Sonnenrades 28 mit der Eingangswelle 1 bei allen betrachteten Fällen als konstante Größe erscheint.

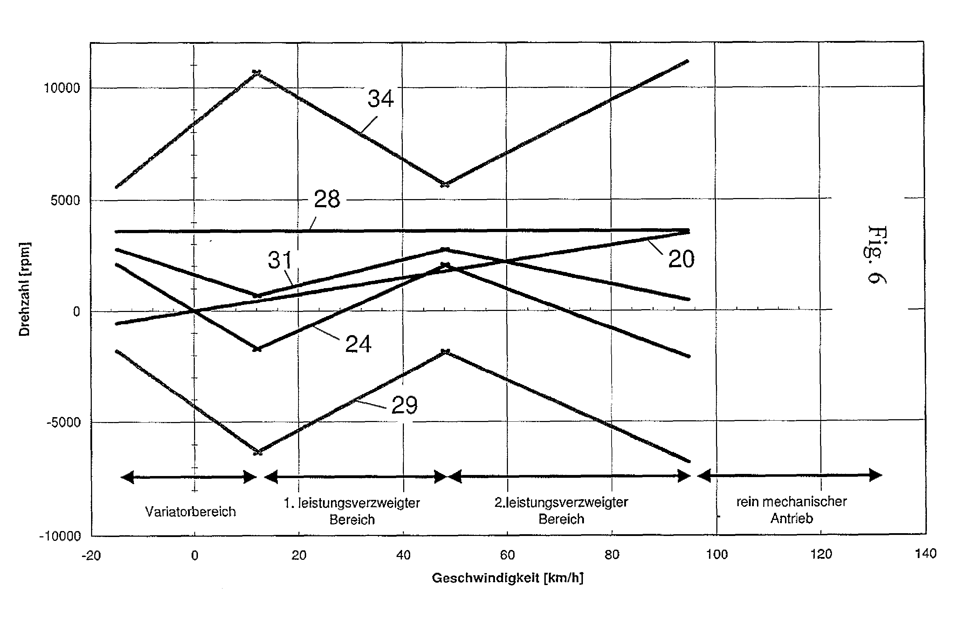

Fig. 6 stellt ein Drehzahldiagramm der einzelnen Komponenten des Summierplanetengetriebes 25 in Abhängigkeit der Fahrzeuggeschwindigkeit nach den Getriebeschemen der Figuren 1 bis 4 dar. Die Geschwindigkeitsvektoren und Drehzahlangaben sind immer unter der Annahme konstanter Drehzahl an der Getriebeeingangswelle 1 zu verstehen. Durch entsprechende Wahl der Übersetzungen der nachgeschalteten Getriebestufen 22, 53 und 38 wird erreicht, dass die Umschaltung zwischen den einzelnen Übersetzungsstufen bzw. Übertragungspfaden in Synchronpunkten und ohne Unterbrechung der Zugkraft erfolgt. Es sind die Drehzahlen am Sonnenrad 28, am Hohlrad 24, am Steg 31, am Sonnenrad 34 und die Relativdrehzahl an den Planetenrädern 29 und 30 in Abhängigkeit der Fahrzeuggeschwindigkeit bei Annahme konstanter Drehzahl an der Getriebeeingangswelle 1 und entsprechender Übersetzungswahl der nachgeschalteten Getriebestufen gezeigt.

Dem Diagramm ist zu entnehmen, dass die Umschaltungen zwischen den einzelnen Getriebestufen jeweils bei Synchrondrehzahlen erfolgen. Die Umschaltungen im Stufenlosgetriebe werden durch überlappendes Schließen der Kupplungen ohne Zugkraftunterbrechung erreicht. Die Kupplungen können sowohl als Lamellenkupplungen, als auch aus formschlüssigen Übertragungselementen, etwa Klauenkupplungen ausgeführt sein. Es muss jedoch gewährleistet sein, dass während des Umschaltvorganges beide beteiligte Kupplungen Drehmoment übertragen können.

Im vorliegenden Ausführungsbeispiel liegt der Bereich reiner Leistungsübertragung über die Variatoreinheit 6 in einem Geschwindigkeitsfenster von -15 km/h bis etwa +12 km/h. Es wird eine konstante Eingangsdrehzahl von 3600 U/min als Drehzahl von Sonnenrad 28 angenommen.

Im Anfahrbereich und bei geringen Geschwindigkeiten bei Vorwärts- als auch bei Retourfahrt erfolgt die Veränderung der Getriebeübersetzung kontinuierlich durch Verstellung der Abtriebsdrehzahl der Variatoreinheit 6 bei geschlossener Kupplung 23.

Bei ausreichender Drehzahl am Hohlrad 24 wird die Synchrondrehzahl im vorliegenden Beispiel bei etwa 12 km/h an den Kupplungen 23 und 36 erreicht und es erfolgt die Lastübergabe von reiner Leistungsübertragung über die Variatoreinheit 6 in den ersten leistungsverzweigten Bereich durch Umschaltung von Kupplung 23 auf Kupplung 36. Im ersten leistungsverzweigten Bereich erfolgt der Abtrieb über den Steg 31. Die Drehzahl des Stegs 31 ist bei maximaler Drehzahl des Hohlrades 24 entgegengesetzt zur Drehrichtung des Sonnenrades 28 am geringsten und nimmt linear mit Veränderung der Drehzahl des Hohlrades 24 zu. Analog dazu wird die Drehzahl des Sonnenrades 34 verringert, je weiter die Drehzahl des Hohlrades 24 sich der Drehzahl des Sonnenrades 28 annähert.

Bei ausreichend hoher Drehzahl des Hohlrades 24 in gleicher Richtung wie das Sonnenrad 28 wird Synchrondrehzahl an den Kupplungen 36 und 37 erreicht, wodurch wiederum eine Zugkraft- unterbrechungsfreie Umschaltung von Kupplung 36 auf Kupplung 37 erfolgen kann und somit vom ersten leistungsverzweigten Bereich in den zweiten leistungsverzweigten Bereich gewechselt wird. Im zweiten leistungsverzweigten Bereich erfolgt die Leistungsabnahme über das Sonnenrad 34 und die nachgeschalteten Stirnradstufen 38 und 17. Durch neuerliche Veränderung der Hohlraddrehzahl entgegen der Drehrichtung des Sonnenrades 28 wird die Drehzahl von Sonnenrad 34 erhöht und maximale Abtriebsdrehzahl bzw. maximale Geschwindigkeit im Stufenlosgetriebe erreicht, im vorliegenden Beispiel bei etwa 94 km/h.

Im erfindungsgemäßen Getriebekonzept ist in einer bevorzugten Ausführungsform zusätzlich die Möglichkeit einer rein mechanischen Leistungsübertragung vorgesehen, was durch Schließen der Kupplung 41 erfolgt. Dieser rein mechanische Gang kann direkt an den leistungsverzweigten Bereich anschließen. Wie bereits erwähnt ist es jedoch sinnvoll, die Übersetzung im mechanischen Gang gegenüber der höchsten Übersetzung im Stufenlosgetriebe zu erhöhen, um das Fahrzeug bei hoher Transportgeschwindigkeit mit reduzierter Drehzahl des Verbrennungsmotors antreiben zu können. Damit sind beste Voraussetzungen für einen äußerst effizienten Betrieb bei hohen Transportgeschwindigkeiten gegeben.

## Patentansprüche

1. Leistungsverzweigungsgetriebe für Kraftfahrzeuge mit einer Brennkraftmaschine, die eine Eingangswelle des Leistungsverzweigungsgetriebes antreibt, wobei das Leistungsverzweigungsgetriebe eine Steuerungseinrichtung aufweist, mit dem die Drehrichtung einer Abtriebswelle zu Rädern des Kraftfahrzeuges veränderbar und mit dem die Drehzahl der Abtriebswelle stufenlos einstellbar ist, **dadurch gekennzeichnet, dass** die Eingangswelle (1) des Leistungsverzweigungsgetriebes über ein Sonnenrad (28) mit einem Summierplanetengetriebe (25) verbunden ist, dass die Eingangswelle (1) des Leistungsverzweigungsgetriebes über eine Stirnradstufe (2) mit der Steuerungseinrichtung verbunden ist, welche als Variatoreinheit (6) ausgebildet ist, dass der Abtrieb entweder über eine Zwischenwelle (16) mit Stirnradstufe (17) zur Abtriebswelle (20) erfolgt oder die Zwischenwelle (16) direkt die Abtriebswelle (20) darstellt, und dass der Abtrieb abhängig von einer Geschwindigkeit des Kraftfahrzeugs entweder über die Variatoreinheit (6) oder über einen ersten leistungsverzweigten Bereich oder über einen zweiten leistungsverzweigten Bereich erfolgt, wobei die leistungsverzweigten Bereiche durch ein unterschiedliches Zusammenwirken der Variatoreinheit (6) und des Summierplanetengetriebes (25) gekennzeichnet sind, und wobei zur Verbindung des jeweiligen Abtriebs mit der Zwischenwelle (16) drei Kupplungen (23, 36, 37) für den zugkraftunterbrechungsfreien Übergang von einem Abtriebsbereich in den nächsten Abtriebsbereich vorgesehen sind.

2. Leistungsverzweigungsgetriebe nach Anspruch 1, **dadurch gekennzeichnet, dass** die Variatoreinheit (6) entweder als Hydrostateinheit, umfassend eine Verstellpumpe (5) mit Verstelleinrichtung (42) und einen Hydromotor (7) als Konstantmotor, oder als Hydrostateinheit umfassend eine Verstellpumpe (5) und einen Verstellmotor (55) in der Form von Axialkolbenmaschinen oder Flügelzelleneinheiten oder als elektrischer Variator in der Form einer Kombination von Generator (56) und Elektromotor (57) mit zugeordneten Invertern (43, 44), gegebenenfalls unter Einbeziehung von hydraulischen oder elektrischen Speichersystemen (45), ausgebildet ist.

3. Leistungsverzweigungsgetriebe nach Anspruch 1 oder 2, **dadurch gekennzeichnet, dass** das Summierplanetengetriebe (25) zwei Sonnenräder (28, 34) mit unterschiedlichem Zahnraddurchmesser, zwei zueinander gestufte Planetenräder (29, 30) mit unterschiedlichem Zahnraddurchmesser, ein Hohlrad (24) und einen Steg (31) umfasst, wobei die beiden Planetenräder (29, 30) untereinander starr gekoppelt und im Steg (31) drehbar gelagert sind und den in einer Hohlwelle (32) gelagerten Steg (31) treiben, der über eine Stirnradstufe (53) auf eine der Kupplungen (36) wirkt.

4. Leistungsverzweigungsgetriebe nach Anspruch 1, 2 oder 3, **dadurch gekennzeichnet, dass** die Variatoreinheit (6) über eine Stirnradstufe (21) und die Hohlwelle (26) einerseits das Hohlrad (24) und andererseits eine Stirnradstufe (22) treibt, wobei die Stirnradstufe (22) über eine der Kupplungen (23) auf die Zwischenwelle (16) wirkt.

5. Leistungsverzweigungsgetriebe nach Anspruch 1, 2, 3 oder 4, **dadurch gekennzeichnet, dass** eine Vorrichtung, insbesondere in Form eines Zwischenzahnrades, eines Kettentriebes oder Riementriebes, zur Erreichung gleicher Drehrichtung zwischen der Hohlwelle (26) und der Zwischenwelle (16) vorhanden ist.

6. Leistungsverzweigungsgetriebe nach Anspruch 1, 2, 3, 4 oder 5, **dadurch gekennzeichnet, dass** das Sonnenrad (34) über die Hohlwelle (27) mit einer Stirnradstufe (38) verbunden ist, welche über eine der Kupplungen (37) auf die Zwischenwelle (16) wirkt.

7. Leistungsverzweigungsgetriebe nach Anspruch 1, 2, 3, 4, 5 oder 6, **dadurch gekennzeichnet, dass** ein rein mechanischer Abtrieb unter Umgehung der Variatoreinheit (6) und der leistungsverzweigten Bereiche von der Eingangswelle (1) über das Sonnenrad (28), die Kupplung (41) und die Stirnradstufe (54) zur Zwischenwelle (16) und von dieser über die Stirnradstufe (17) zur Abtriebswelle (20) vorgesehen ist.

8. Leistungsverzweigungsgetriebe nach einem oder mehrerer der Ansprüche 3, 4 und 6, **dadurch gekennzeichnet, dass** die Übersetzungen in den einzelnen Stirnradstufen (22, 53, 38) so gewählt sind, dass die Umschaltung von einem Geschwindigkeitsbereich in den nächsten Geschwindigkeitsbereich ohne Unterbrechung der Zugkraft in Synchronpunkten erfolgt.

9. Leistungsverzweigungsgetriebe nach einem der Ansprüche 1 bis 8, **dadurch gekennzeichnet, dass** für Kraftfahrzeuge mit hohen Geschwindigkeitsanforderungen in beiden Fahrtrichtungen die Umkehr der Drehrichtung des gesamten mechanischen Abtriebsstranges am Getriebeeingang durch eine Umkehrvorrichtung (46) erfolgt, welche insbesondere in der Form von Lamellenkupplungen (47) und (48) mit zugeordneten Stirnradstufen (49) und (50) ausgebildet ist.

10. Leistungsverzweigungsgetriebe nach einem der Ansprüche 1 bis 9, **dadurch gekennzeichnet, dass** für Kraftfahrzeuge mit hohen Geschwindigkeits-und/oder Zugkraftanforderungen in beiden Fahrtrichtungen das Leistungsverzweigungsgetriebe mit einem nachgeschalteten Rangegetriebe (51) mit High/Low Stufe und mit einem Reversiergetriebe (52) zwischen dem Leistungsverzweigungsgetriebe und dem Rangegetriebe (51) ausgeführt ist.
